Europäisches Patentamt

European Patent Office

Office européen des brevets

(11) Publication number: **0 393 465**

**A2**

## EUROPEAN PATENT APPLICATION

(21) Application number: **90106780.1**

(22) Date of filing: **09.04.90**

(51) Int. Cl.5: **G21B 1/00**

(30) Priority: **20.04.89 JP 103098/89**
**07.07.89 JP 179224/89**

(43) Date of publication of application:
**24.10.90 Bulletin 90/43**

(84) Designated Contracting States:
**DE FR GB**

(71) Applicant: **SEMICONDUCTOR ENERGY**
**LABORATORY CO., LTD.**
**398 Hase**
**Atsugi-shi Kanagawa-ken, 243(JP)**

(72) Inventor: **Yamazaki, Shunpei**
**21-21, Kitakarasuyama, 7-chome**
**Setagaya-ku, Tokyo 157(JP)**
Inventor: **Miyanaga, Akiharu**
**Coop Denen 2-6, 1-5-5, Nagao**
**Tama-ku, Kawasaki-shi, Kanagawa-ken**
**214(JP)**
Inventor: **Takemura, Yasuhiko**
**Flat Atsugi 208, 931-1, Hase**
**Atsugi-shi, Kanagawa-ken 243(JP)**

(74) Representative: **Patentanwälte Grünecker,**
**Kinkeldey, Stockmair & Partner**
**Maximilianstrasse 58**
**D-8000 München 22(DE)**

(54) **Method for producing plasma nuclear fusion.**

(57) A method for producing a plasma nuclear fusion
is comprised of the steps of providing a reaction
vessel for causing nuclear fusion reaction therein,
placing a pair of electrodes within the reaction vessel, at least one of the electrodes formed with a
surface portion of a reactive material for nuclear
fusion raction which is made of palladium, titanium
or a iron-titanium alloy and is cooled by a coolant so
that the deuterium is easily absorbed in the reactive
material, introducing into the reaction vessel a gaseous material selected from the group of deuterium
and a deuterium compound, activating the gaseous
material to produce a plasma of the gaseous ma-
terial, and causing nuclear fusion reaction on the
reactive material.

FIG. 1

## METHOD FOR PRODUCING PLASMA NUCLEAR FUSION

### BACKGROUND OF THE INVENTION

#### Field of the Invention

The present invention relates to a method for producing a nuclear fusion reaction, and specifically to a method of attaining improved reliability in the implementation of a nuclear fusion reaction through generating plasma.

#### Description of the Prior Art

A nuclear fusion reaction by electrochemical process, which is referred to as cold nuclear fusion, has been attained and reported by S.E. Jones et al. The paper is entitled "Observation of Cold Nuclear Fusion in Condensed Matter" and was authored by S.E. Jones, E.P. Palmer, J.B. Crirr, D.L. Decler, G.L. Jensen, J.M. Thorne, S.F. Taylor, (all of Brigham Young University), and J. Rafelski (University of Arizona).

In this reaction, a pair of electrodes comprising a palladium or titanium cathode and a gold or platinum anode are inserted into a solution containing heavy water ($D_2O$) and a slight amount of salt such as AuCN, and a DC voltage is applied across these electrodes. In addition, the electrochemical nuclear fusion reaction is carried out at an atmospheric pressure.

Because of the fact that this reaction is carried out in an aqueous solusion in a normal environment, there is little possibility deuterium nuclei (d) combine with other deuterium nuclei to produce the nuclear fusion.

Atoms or nuclei of deuterium are created at a portion of the cathode and simultaneously the nuclear fusion reaction of deuterium are caused at the same portion.

Also, since a solusion is used, palladium which is used as a catalyst for combining the deuterium atoms is easily poisoned to be coated with a poisoned film of inactive substance, whereby the extent of catalyst reactivity is deteriorated, and it is difficult to break down the poisoned film to produce a uniform nuclear fusion. For this reason, there is a high degree of variation and a lack of reproducibility in the nuclear fusion reaction. In addition, because of the occurrence of electrochemical side reactions which takes place simultaneously with the nuclear fusion, most of the products of the reaction decompose and the deuterium is eventually released in a gas into the atmosphere. As a result, the amount of deuterium actually used in the nuclear fusion reaction is considerably less than expected. Therefore, a method of reliably controlling the nuclear fusion reaction with a high probability of nuclear fusion occurring is further required.

### SUMMARY OF THE INVENTION

An object of the present invention is to provide, with due consideration to the drawbacks of such a prior art reaction system, a method of attaining improved reliability in the implementation of a nuclear fusion reaction by using a reactive material for nuclear fusion reaction and efficiently taking out the energy obtained in the nuclear fusion reaction to outside.

Another object of the present invention is to provide a method of attaining improved reliability in the implementation of a cold nuclear fusion reaction using a highly pure deuterium ($D_2$) or a compound of deuterium such as heavy water ($D_2O$) in a gaseous state.

Another object of the present invention is to provide a method of attaining improved reliability in the implementation of a nuclear fusion reaction using a highly pure deuterium ($D_2$) or a compound of deuterium such as heavy water ($D_2O$) in a liquid state instead of the gas state.

Another object of the present invention is to provide a method of attaining improved reliability in the implementation of a nuclear fusion reaction causing the nuclear fusion reaction at an area different from the area where the deuterium gas is made into plasma.

In the present invention, the reactive material for nuclear fusion reaction is made of a material which absorbs hydrogen and placed in a plasma generating space. Neutrons generated in the reaction in the plasma generating space are released to a base with a chamber disposed behind the reactive material for nuclear fusion reaction. The chamber is filled with a heat transfer medium such as water ($H_2O$) in which the energy of neutrons is consumed. Thus, the energy of the neutrons is given to the medium for heat exchange. By releasing this heat energy to the outside through the heat transfer medium, the energy produced by the nuclear fusion reaction, especially the heat energy of the nuclear fusion reaction, becomes a simple energy source and can be used industrially.

### BRIEF DESCRIPTION OF THE DRAWINGS

Figure 1 is a schematic illustration showing one embodiment of the plasma nuclear fusion reaction system in the present invention.

Figure 2 is a graph showing a bias relationship between a pair of electrodes appearing in Figure 1.

Figure 3 is a graph showing the neutron count measured by the neutron counter used in one embodiment of the present invention.

Figure 4 is a schematic illustration showing another embodiment of the plasma nuclear fusion reaction system in the present invention.

## DETAILED DESCRIPTION OF THE PREFERRED EMBODIMENTS

In the nuclear fusion reaction in the present invention, a solution for nuclear fusion reaction material used in the prior art nuclear fusion process is not adopted, but 98% pure or better deuterium ($D_2$) or a compound of the deuterium such as heavy water ($D_2O$) in a gaseous or liquid state is used with the remaining being made up of hydrogen ($H_2$) and 100 PPM or less of other matter. The liquid state here is to be obtained at a temperature close to the liquid hydrogen temperature.

The gas is made into plasma in the plasma generating space, and the ions and electrons are collided a cathode placed in the plasma generating space. The cathode has a reactive material in which a great amount of hydrogen is absorbed.

The cathode is cooled by the liquid nitrogen, so that the gas is blown onto the the cathode material so as to increase the density of deuterium in the cathode material.

By doing so, the probability of generating nuclear fusion is increased and energy produced by the nuclear fusion reaction is more efficiently let to go out of the reaction system with less energy escaping.

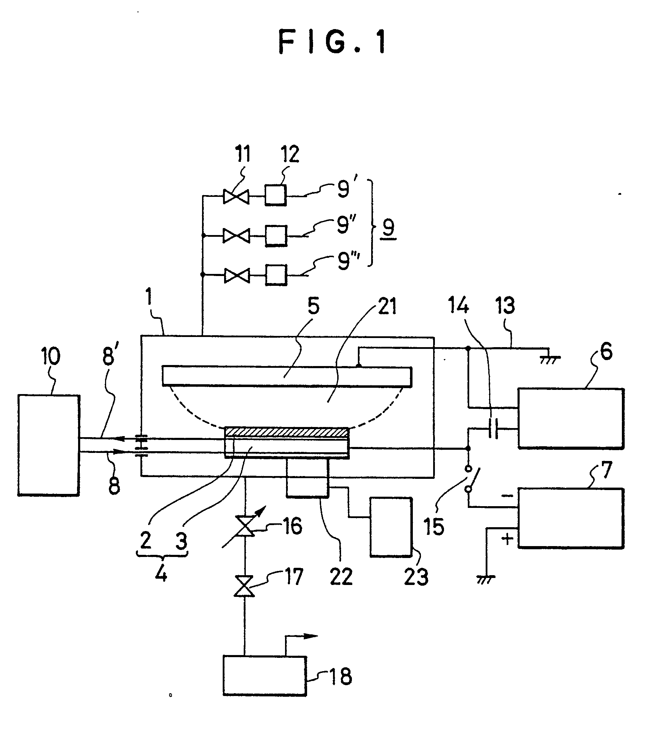

Figure 1 gives a description of the plasma vapor nuclear fusion system using deuterium ($D_2$) or a compound of such deuterium such as heavy water ($D_2O$) in a gaseous state.

A nuclear fusion reaction vessel (1) has a plasma generating space (21), which is capable of maintaining a reduced pressure for plasma generating. Provided in the plasma generating space (21) is a pair of electrodes (5) and (4), that is anode (5) and cathode (4). The cathode (4) is formed with a surface portion (2) and a hollow base (3) placed behind the surface portion (2) and having a chamber therein. The surface portion (2) is made of a reactive material such as palladium or titanium. The chamber is filled with a heat transfer nedium, for example water. The hollow base (3) is made of a stainless steel. The cathode (4) is formed by sputtering e.g. palladium or titanium to form the surface portion (2) on the base (3).

In order to apply a negative self bias to the cathode (4), the cathode (4) has a sufficiently smaller electrode area than the anode (5).

Provided to apply a negative bias from outside to the cathode (4) is a DC power supply (7) having a switch means (15) for the cathode (4) on the minus side with the plus side earthed or grounded.

Provided to apply a high frequency voltage between 500KHz and 500MHz is a high frequency power supply (6) which is earthed or grounded on the anode side (13) and provided with a capacitor (14) so as to prevent the DC bias from being introduced.

Provided to take out the energy of neutrons is a heat exchange device (10) which has an input line (8) and an output line (8') for a heat exchange medium such as water, through which the heat exchange device (10) is communicated with the chamber in the base (3).

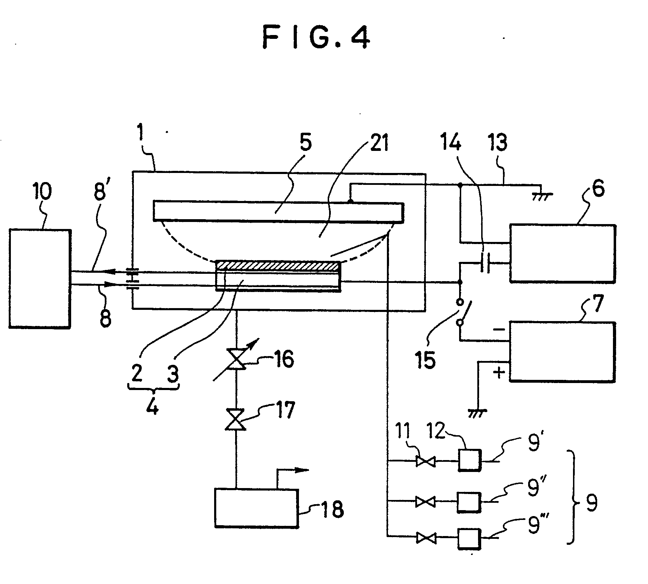

Provided for reactive gases is a gas system (9) including Helium (He) by line (9'), Deuterium ($D_2$) by line (9") and Hydrogen ($H_2$) by line (9‴). They pass through a flow meter (12) and a valve (11) and then enter the space (21) of the present plasma nuclear fusion reaction system. They are introduced into the plasma generating space (21) as shown in Figure 1, or onto the cathode (4) as shown in Figure 4.

The reaction vessel (1) is provided with an exhaust system containing a pressure control valve (16) and a stop valve (17) and an exhaust pump (18) to obtain a plasma generating pressure between 0.001 and 1000 torr.

In the nuclear fusion system as previously mentioned, deuterium ($D_2$) or a compound of deuterium such as heavy water ($D_2O$) in a gaseous state is introduced in the reaction vessel (1), which is ionized in plasma through electric energy application.

In addition, an electric field is applied from outside for negative bias to attract the deuterium ions in the plasma to the surface portion of the reactive material (2) for causing nuclear fusion reaction thereon. The reactive material (2) is typically made of palladium or titanium. A self bias in the electric field can also be used instead of the electric field from outside. The biased electric field is effective to attract deuterium atoms to the electrode (4).

The self-bias is procuded by the shape anisotropy design of the pair of discharge electrodes, while the bias from outside is procuded by applying a DC bias in addition to the application of the high frequency voltage, so that a negative bias is applied on the reactive material.

Deuterium atoms (d) collide with the surface of the reactive material (2) in the cathode (4) and cause nuclear fusion reactions on the surface of the reactive material. The nuclear fusion reactions occur also in the reactive material close to the surface.

In one embodiment of the present invention, the cathode (4) is modified to increase the nuclear fusion rate. Specifically, the cathode (4) is made of a material which absorbs a great amount of deuterium to produce a metallic hydride, that is a hydrogen storage material such as titanium, palladium, iron-titanium alloys. Since the hydrogen storage amount of this material increases at a low temperature, the cathode (4) is cooled by the liquid nitrogen.

The deuterium introduced is injected in the space (21) as shown in Figure 1, or blown onto the cathode (4) as shown in Figure 4, so that the deuterium is easily absorbed in the cathode (4) to increase the amount of deuterium storage. The gaseous deuterium is desirably produced from the liquid deuterium.

It is not clear whether the application of voltage in pulse and the change of temperature affect the crack occurrence in the cathode material, but according to phenomena, the application of voltage in pulse and the change of temperature seem to increase the nuclear fusion rate.

Thus, deuterium atoms are produced on or close to the surface of the reactive material (2) causing nuclear fusion reaction.

The neutrons (n) are detected by a neutron counter or neutron spectrometer (22) placed adjacent to the reaction vessel (1) for evidence of the cold nuclear fusion, specifically detecting the existence and amount of the neutrons produced there. The neutron counter or neutron spectrometer (22) is controlled by a control system (23).

From the facts that the neutrons (n) are thus detected, the following nuclear fusion reaction can be expected as possible.

$$d + d \longrightarrow {}^3He(0.82 \text{ MeV}) + n(2.45 \text{ MeV})$$

At the same time the following reaction can also be expected.

$$d + d \longrightarrow P(3.02 \text{ MeV}) + t(1.01 \text{ MeV})$$

As a result of the nuclear fusion reaction, the neutrons collide the heat transfer medium (for example water) in the chamber in the base (3) located behind the reactive material (2) carrying an energy of 2.45 MeV producing a rise in temperature, by which an energy exchange as in the formulae above is detected. Specifically, energy of neutrons generated by the nuclear fusion reaction is absorbed by the heat transfer medium such as water contained in the base (3) behind the reactive material (2). The neutrons collide the water to increase its temperature, and the water is introduced out to the heat exchange device (10) to take out the energy.

The existence of the neutrons are detected also using the neutron spectrometer (22) as mentioned above.

The production of neutrons and also the rise in temperature of the medium increases proportionally as the plasma pressure in the reaction vessel (1) is increased and also as the applied electric energy is increased.

The nuclear fusion reaction is apparently promoted as the negative bias voltage is increased through the self-bias system or the outside bias system, which is not experienced when no bias is applied by such a bias system.

The DC bias voltage can be increased from -100V to -1000V. Of course the voltage could have been increased more than this, but there is the danger of explosions which may happen to occur; specifically, increasing the reaction efficiency too high will be followed by explosion.

It is important that the reaction is controlled so as not to advance too much when palladium is arranged on the surface portion (2) of the electrode (4) in the plasma generating space (21), so that nuclear fusion is attempted there. Therefore, although a sufficiently high voltage is applied enough for a reaction to take place, the nuclear fusion reaction is controlled so as not to exceed the critical value by applying the negative direct current bias in intervals or pulses.

Specifically, the voltage is applied at 1 to 1000 pulses per minute and the pulse width is also varied from 0.1% to 100%. The 100% pulse width means a continuous state, which is referred to as negative DC continuous voltage. As a result, in the case where DC continuous voltage is applied, the existence of nuclear fusion is observed even at as little as -200 V.

In the case where a DC pulsed voltage is applied, with a sufficiently high voltage, for example, -300 to -1000 V, and especially, for example, at -500V, and also with a duty ratio of 50% and a frequency of 30 times per minute, it is possible to suppress or control the extent of the nuclear fusion. Here, the term "duty ratio of 50%" means that voltage is applied for 50% of a single cycle with no voltage applied for the other 50% of the cycle.

The present invention will be more clearly understood by reading the following examples.

EXAMPLE 1

Using the apparatus as shown in Fig. 1, a plasma vapor nuclear fusion reaction was carried out as follows;

A pair of electrodes (5) and (4), that is anode (5) and cathode (4) were formed inside the nuclear fusion reaction vessel (1) capable of maintaining a reduced pressure for plasma generating. The cathode (4) was formed with a palladium surface portion (2) and a hollow base (3) behind the palladium surface portion (2), and the hollow base (3) was formed with a chamber therein. The hollow base (3) was made of a stainless steel. The cathode (4) was formed by sputtering palladium on the base (3).

The cathode (4) had a sufficiently smaller electrode area than the anode (5), so that a negative self bias was applied to the cathode (4).

The negative bias was also applied from the DC power supply (7) to the cathode (4) through the switch means (15).

A high frequency voltage between 500KHz and 500MHz, for example 13.56MHz was applied from the high frequency power supply (6).

When the power supply from the high frequency power supply (6) was zero, and only the DC voltage was applied to the pair of electrodes (4) and (5), and the DC plasma discharge was generated.

Water as the heat exchange medium was desirably used in the heat exchange device (10) to consume the energy of neutrons by converting it to heat energy.

Reactive gases such as deuterium were introduced to the reaction vessel (1) from the gas system (9) through the flowmeter (12) and the valve (11). Thus, Helium (He), Deuterium ($D_2$) and Hydrogen ($H_2$) were added as required.

The reaction vessel (1) was kept at a plasma generating pressure between 0.001 and 1000 Torr, for example 0.1 Torr using the pressure control valve (16) and the stop valve (17) and the exhaust pump (18). The higher this pressure the larger the nuclear fusion reaction velocity.

Thus, nuclear fusion reaction was found to occur in this example.

EXAMPLE 2

In the equipment of Figure 1, the cathode (4) with a diameter of 10 cm was made of palladium coating (2) on the hollow base (3), and the anode (5) with a diameter of 20 cm was made over the cathode (4).

The high frequency supply (6) was operated at a value of 13.56 MHz, and the electric power was applied between 50 to 500 W, for example 200 W. No DC voltage is applied from the variable DC power supply (7).

A flow of 20cc/min of deuterium in the form of high purity deuterium gas was made through gas line (9"). In order to produce plasma in the space (21), the exhaust line was adjusted and the pressure was kept at 0.1 Torr.

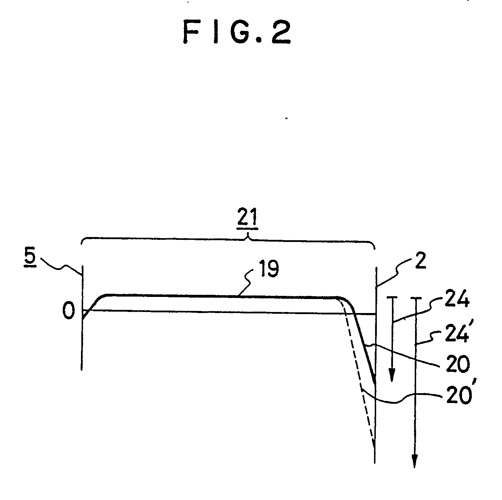

Fig.2 shows a potential across the plasma space (21), wherein a positive column (19) and a voltage drop (20) caused by a negative self bias appear between the anode (5) and the cathode (4). And the potential difference (24) between the positive column (19) and the cathode (4) is -183V.

It is expected that the impact of deuterium in positive ions reduce and remove any filth from the palladium surface portion (2) to activate the palladium, and that the following nuclear fusion reaction is then obtainable through the activated palladium;

d + d --> $^3$He(0.82 MeV) + n(2.45 MeV).

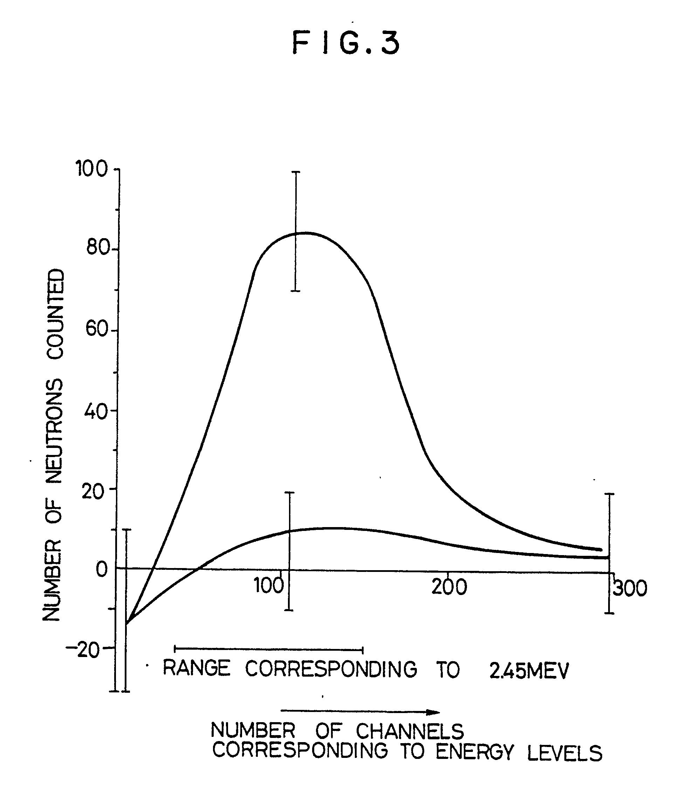

In Figure 3, the abscissa is the number of channels corresponding to the energy and the ordinate axis is the neutron count.

It is concluded after making several measurements that although the variation of width (27) from top to bottom is found to be large, the neutron count in the region corresponding to the neutron energy is apparently increased and so makes it possible to confirm the existence of the above formula.

In this example, the neutron counter (22) clearly confirmed the existence of neutrons. The existence of this nuclear fusion reaction was also confirmed by the experiences that the temperature of the reaction rose and a temperature rise of the water inside the heat exchange vessel (10) was observed. The water temperature rose from room temperature to nearly 40 $^\circ$C. When the plasma was maintained, the nuclear fusion reaction stably continued for nearly 500 hours.

In trying to disprove that no nuclear fusion reaction occurs with another substance other than the deuterium, hydrogen ($H_2$) was added by way of line (9‴), as shown in Figure 1, and the plasma reaction was attempted under the same conditions.

In Figure 3, when hydrogen is used, the neutron count is found to be the same as the background level. The curve (26) showing this neutron count is shown in Figure 3. The neutron count (26) obtained under these conditions is apparently different from the count (25) obtained when deuterium is used. This clearly confirms that nuclear fusion has occurred in this example using the deuterium.

.

EXAMPLE 3

When the switch (15) of the variable DC power supply (7) in Figure 1 was turned on, a negatively biased direct current was added to a high frequency voltage which was applied to the pair of electrodes (4) and (5). This variable bias voltage was added in the range of from -50 V to -1000 V.

When this was done, the number of collisions of the deuterium ions with the palladium surface portion (2) was increased due to the direct current bias. As a result, it was easier to produce more deuterium nuclei.

The bias voltage (24') of Figure 2 was increased by the bias voltage (20'). The bias voltage (24') was self-controlled by using the variable DC power supply (7). By doing so, the neutron count at location 100 of Figure 3 increased to the range of 40 to nearly 80 from the value of 40 in average which occurred when no DC bias was applied.

It should be noted that the result of the exterior negative bias is very remarkable.

EXAMPLE 4

In the equipment of Figure 1, the process was carried out in a manner substantailly the same as in EXAMPLE 2 except that a negative DC voltage in pulse was applied from the variable DC power supply (7).

In this case, the duty ratio is controlled, so that the heat generation through nuclear fusion was separated from the heat generation caused by destroying the palladium surface through sputtering, so that the existence of nuclear fusion reaction was more precisely confirmed.

EXAMPLE 5

The reactive gas was introduced through a position shifted from that in Figure 1. Specifically, as shown in Figure 4, a piping extending from the gas system (9) was connected to a nozzle within the reaction space (21), and the nozzle was provided with a tip end from which the reactive gas was blown onto the surface of the reactive material (2). The chamber in the base (3) was filled with a coolant of liquid nitrogen.

By using this system, similar processes as in EXAMPLES 1 to 4 were repeatedly carried out, and it was found that the density of deuterium was increased around the cathode (4), so that the rate of nuclear fusion reaction was made substantially higher than when no cooling was conducted.

All of the above examples were merely performed on the laboratory scale. However, by expanding this scale 10 - 1000 times, a nuclear fusion reaction with practical use can now be obtained and the nuclear fusion reaction can be used for some practical application such as a controllable energy source. Therefore, the present invention should have a very large industrial impact.

**Claims**

1. A method for producing a plasma nuclear fusion comprising the steps of providing a reaction vessel for causing nuclear fusion reaction therein, placing a pair of electrodes within the reaction vessel, at least one of the electrodes formed with a surface portion of a reactive material for nuclear fusion raction, introducing into the reaction vessel a gaseous material selected from the group of deuterium and a deuterium compound, activating the gaseous material to produce a plasma of the gaseous material, and directing the gaseous material in plasma toward the reactive material for causing nuclear fusion reaction.

2. The method of claim 1, wherein the reactive material for nuclear fusion raction has a surface, and the nuclear fusion reaction is caused on the surface of the reactive material.

3. The method of claim 1, wherein the reactive material for nuclear fusion raction has a surface, and the nuclear fusion reaction is caused around the surface of the reactive material.

4. The method of claim 1, wherein a negative bias is applied to the at least one of the electrodes formed with the surface portion of the reactive material.

5. The method of claim 4, wherein a negative bias is a self-bias.

6. The method of claim 4, wherein a negative bias is applied from outside.

7. The method of claim 1, wherein the reactive material for nuclear fusion raction is selected from the group of palladium and titanium.

8. The method of claim 4, wherein the negative bias is applied in pulse.

9. The method of claim 4, wherein the negative bias is applied continuously.

10. The method of claim 4, wherein the reactive material for nuclear fusion raction has a surface, and the nuclear fusion reaction is caused on the surface of the reactive material.

11. The method of claim 4, wherein the reactive material for nuclear fusion raction has a surface, and the nuclear fusion reaction is caused around the surface of the reactive material.

12. The method of claim 1, wherein the reactive material for nuclear fusion raction is cooled by a coolant so that the deuterium absorbed in the reactive material is increased in amount, and introducing the deuterium in a manner that the gaseous deuterium is blown to the reactive material to cause the nuclear fusion reaction.

13. The method of claim 12, wherein the reactive material for nuclear fusion raction is made of a hydrogen absorbing material selected from the group of palladium, titanium, and a iron-titanium alloy.

14. The method of claim 12, wherein the coolant is selected from the group of liquid nitrogen and liquid hydrogen.

15. The method of claim 12, wherein a negative bias in pulse is applied to the at least one of the electrodes formed with the surface portion of the reactive material.

16. The method of claim 15, wherein a negative bias is a self-bias.

17. The method of claim 15, wherein a negative bias is applied from outside.

18. The method of claim 12, wherein a negative bias is continuously applied to the at least one of the electrodes formed with the surface portion of the reactive material.

19. The method of claim 14, wherein a negative bias is a self-bias.

20. The method of claim 14, wherein a negative bias is applied from outside.

# FIG. 1

# F I G . 2

# F I G . 3

# F I G. 4